# EUROPEAN PATENT SPECIFICATION

(11) **EP 0 795 280 B1**
(45) Date of publication and mention of the grant of the patent: **14.09.2005**
(21) Application number: 97301445.9
(22) Date of filing: 04.03.1997
(51) Int. Cl.: A43B 5/14, A43B 13/12, B29D 31/518, B29D 31/50, B29C 45/14

(54) **Cycling shoe core, molding method and molding apparatus for same**
Kern von einem Fahrradschuh, Formgebungsverfahren und Formvorrichtung zu dessen Herstellung
Noyau d'une chaussure de cyclisme, procédé et dispositif de moulage pour sa fabrication

(30) Priority: 15.03.1996 JP 8733696
(43) Date of publication of application: 17.09.1997
(73) Proprietor: SHIMANO INC., Osaka 590-0824 (JP)
(72) Inventor: Nakashima, Yuji, Sakai-shi, Osaka (JP)
(74) Representative: Murnane, Graham John

(56) References cited:
- EP-A- 0 553 934
- EP-A- 0 749 704
- FR-A- 2 405 037
- FR-A- 2 555 417
- US-A- 3 807 062
- US-A- 4 050 108

## Description

### BACKGROUND OF THE INVENTION

The present invention is directed to bicycling shoes and, more particularly, to a sole core for such a shoe together with the method and apparatus for molding the core.

The sole core of a cycling shoe that has a cleat for driving a bicycle pedal is such that the sole supporting the arch is molded hard in order to impart rigidity to the shoe. This rigidity is an important physical element in terms of transmitting the force of the leg to the pedal as the leg lifts or depresses the pedal.

The sole is made up of a first core that is molded from a harder material, and a second core that is joined around the periphery of this first core. It is preferable for the material of the second core to be more flexible than that of the first core. The reason for this is that the first core primarily imparts rigidity to the shoe, while the second core imparts flexibility. This dual property of rigidity and flexibility allows the leg force to be transmitted efficiently to the pedal while still ensuring that the shoes will be easy to walk in, and that leg movement with respect to the pedal will be relatively free. Such an arrangement can be seen in FR 2,405,037, for example.

An upper, which is the part that covers the top of the foot, and left and right side components, which link the sole and the upper, are continuously attached to the second core. The left and right side components are tightened with laces, straps, or the like. Overall rigidity is imparted so that the upper, the side components, and the sole will move integrally, which allows the leg force to be transmitted efficiently to the pedal. A surface-attaching fastener is used for the straps. This fastener allows the tightness to be freely adjusted before and after sustained riding.

The integral assembly of the first core and the second core, which are made of different materials, has been accomplished up to now by a bonding method in which an adhesive agent is used. This time-consuming bonding work is a factor that drives up the cost of the product. Also, a bonding method such as this results in unstable bonding strength between the first core and the second core.

The means for integrally bonding the side components and the upper to the second core has exclusively been stitching up to now. This work is another factor in higher cost, and the bonding strength between the side components and the upper is weak, so there is poor integrity between the foot and the shoe or pedal.

### SUMMARY OF THE INVENTION

A first aspect of the present invention is directed to a cycling shoe sole core that provides superior integrity between the foot and the pedal or shoe sole, and particularly between first and second sole cores, while reducing the cost of the product. A second aspect of the present invention is directed to a method for molding a cycling shoe core that has the above advantages while also reducing fabrication costs. A third aspect of the present invention is directed to a molding apparatus for molding a cycling shoe in accordance with the first aspect. In one embodiment of the present invention, a cycling shoe core includes a first core having a curved longitudinal shape and a cleat attachment hole, and a second core affixed to the first core on a left side component and a right side component of the first core. The first core is stiffer than the second core, and the second core has at least one upwardly extending side component. The second core also includes a second core upper covering component which covers the upper surface of the first core. The left side component and the right side component of the first core are formed thinner than a centre component of the first core The sole cores are integrated by injection molding. As a result, the two cores are uniformly integrated over their entire surfaces without requiring an adhesive agent.

In a more specific embodiment, the second core includes a left side (outside) component extending upwardly from the left side component of the first core, a right side (inside) component extending upwardly from the right side component of the first core, a second core lower covering component disposed beneath a lower surface of the first core, and a second core upper covering component covering an upper surface of the first core. The side components that rise up integrally with the second core are relatively flexible, and can be easily bonded with the other components by stitching. The outside side component, which may rise up higher than the inside side component, is bent over and readily constitutes the upper. The inside side component resiliently supports the side of the foot. The portion of the second core that covers the upper surface of the first core softens and attenuates the strong impact between the foot and the pedal or cleat. The second core lower covering component disposed beneath the lower surface of the first core does not weaken the force transmitted between the foot and the cleat, but during walking it softens and attenuates the impact between the foot and the ground.

The first core and the second core can be manufactured at low cost by insert injection molding. In this case, the side components are also molded at the same time as the second core. The molten material of the second core is injected at a suitable pressure into the reinforcing structure holes provided to the first core, which firmly bonds the first core to the second core.

The side components and their curved components can be molded by means of three mold elements. Since the second core is flexible, the mold element can be removed from the second core even though the second core has molded side components.

### BRIEF DESCRIPTION OF THE DRAWINGS

Figure 1 is a cross sectional view of a particular embodiment of a cycling shoe core according to the present invention;
Figure 2 is a side view of a first sole core shown in Figure 1;
Figure 3 is a view taken along line III-III in Figure 4;
Figure 4 is a bottom view of the first sole core shown in figure 1;
Figure 5 is a view taken along line V-V in Figure 6;
Figure 6 is a bottom view of the sole core shown in Figure 1;
Figure 7 is a side view of the sole core shown in Figure 6;
Figure 8 is a side view showing an upper member stitched to the sole core shown in Figure 6;
Figure 9 is a left side view of a particular embodiment of a completed shoe which incorporates a sole core according to the present invention;
Figure 10 is a right side view of the completed shoe shown in Figure 9; and
Figure 11 is a cross sectional view of a particular embodiment of an injection mold according to the present invention used to fabricate the sole core shown in Figure 1.

### DETAILED DESCRIPTION OF THE EMBODIMENTS

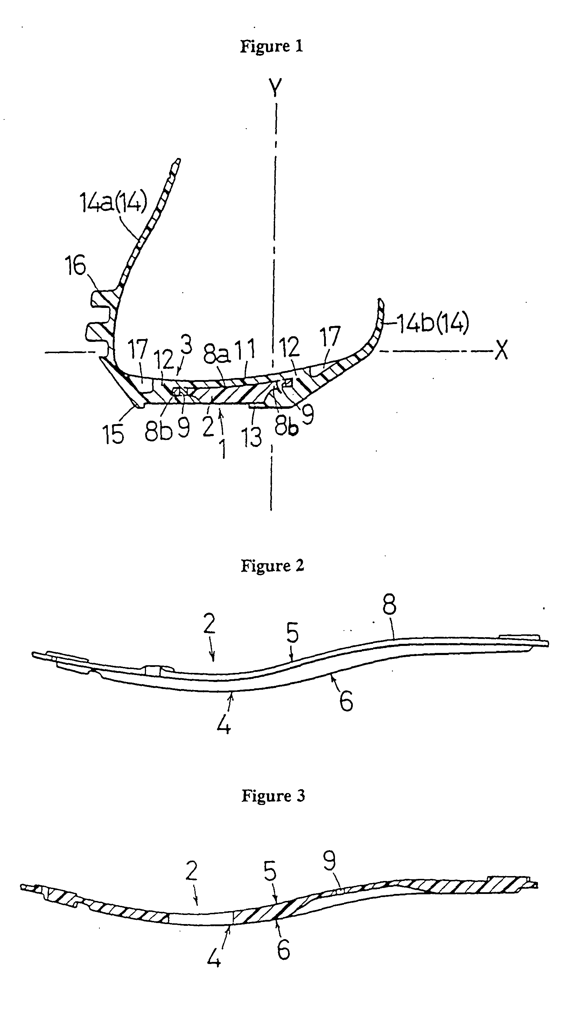

Figure 1 is a cross sectional view of an embodiment of a left side cycling shoe sole core pertaining to the present invention. The left side in Figure 1 is the outside of a shoe for the left foot. The cycling shoe sole core 1 is made up of a first core 2 that forms the middle portion of the sole core 1, and a second core 3 that is joined on at least both side surfaces of the first core 2. The second core 3 is an injection molded article.

The first core 2 is equipped with a fixing component for fixing a cleat. The cleat and its fixing component are not shown in the figure. The cleat fixing component is a concave component molded on the back of the first core 2. As shown in Figures 2 and 3, the upper and lower surfaces of the first core 2 are molded as curved surfaces 4 and 5. The curved line in a center cross section has an inflection point 6. The upper surface of the arch is molded such that it is concave below.

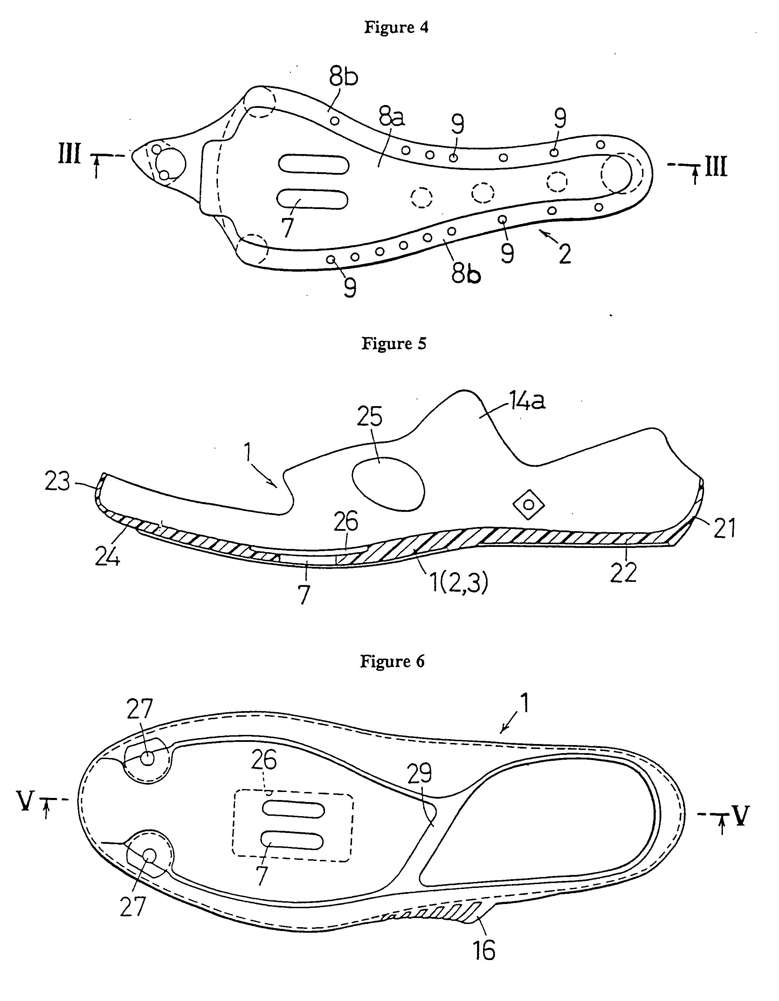

Figure 4 shows the cleat attachment holes 7 that are used to attach the cleat. As shown in Figures 1 and 2, the first core 2 has a first core center component 8a that forms the center component, and left and right first core side components 8b. The first core side components 8b are molded integrally with the first core center component 8a. The left and right first core side components 8b are contiguous at the rear. The first core side components 8b that are contiguous at the rear go more or less all the way around. The first core center component 8a is formed thicker, while the first core side components 8b are formed thinner. The upper surface of the first core center component 8a and the upper surface of the first core side components 8b are a curved surface molded into a single contiguous surface.

Bonding strength reinforcing holes 9 are made in a line in the first core side components 8b. Figure 3 is a cross section taken along the III-III line of Figure 4. As shown in Figure 3, the bonding strength reinforcing holes 9 go all the way through the upper and lower surfaces. The material of the second core 3 is injected into the bonding strength reinforcing holes 9 during the injection molding of the second core 3.

As shown in Figure 1, the second core 3 is joined to the first core 2 such that it covers the first core 2 except for the center band on the lower surface of the first core 2. The second core 3 is molded from a second core covering component 11 that is joined to the upper surface of the first core 2 and covers the upper surface, and left and right second core side components 12 that are joined to the left and right side surfaces of the first core 2. The second core side components 12 are integrally joined to the side surfaces of the first core center component 8a, the side surfaces of the first core side components 8b, and the lower surface of the first core center component 8a. The second core side components 12 have a second core lower covering component 13 that cover from below a part of the lower surface of the first core 2. The second core side component 12 on the outside has a lower protrusion component 15 that sticks out to a position that is lower than the lower surface of the first core 2.

The second core side components 12 integrally include riser components 14 that curve upward and extend to the sides. The riser components 14 comprise an outside riser component or outside second core curved side component 14a, and an inside riser component or an inside second core curved side component 14b. The outside second core curved side component 14a rises up to a higher position than the inside second core curved side component 14b. The outside second core curved side component 14a has molded into it a reinforcing protrusion structure 16 that serves to reinforce the structure. Concave components 17 that serve to increase the bendability of the riser components 14 are provided at the boundaries between the riser components 14 and the second core side components 12.

The first core 2 is molded from a relatively hard material, while the second core 3 is molded from a relatively soft material. The hard material used to produce the first core 2 may be a nylon resin containing glass fibers, and the soft material used to produce the second core 3 may be a nylon elastomer. More specifically, the material of the hard first core is nylon containing 30 to 50% glass, and its flexural modulus is 70,000 to 140,000 kg/cm². Carbon can also be used, although the cost will be higher. The flexural modulus of the first core of a similar shoe currently being manufactured by the firm applying for the present invention should be approximately 25,000 to 50,000 kg/cm². Favorable materials for the softer second core include polyurethane elastomers and nylon elastomers. The flexural modulus should be approximately 1000 to 3000 kg/cm².

Figure 5 shows the sole core 1 in which the second core 3 has been integrated with the first core 2 by injection molding, and is a side cross section viewed along the V-V line in Figure 6. Figure 6 is a bottom view. As shown in Figure 5, the second core 3 has molded into it a rearward extension component 22 that extends rearward and has a heel component 21, and a forward extension component 24 that extends forward and has a toe component 23. The heel component 21 and the toe component 23 are curved such that they are convex outwardly. A decorative hole 25 that provides ease of bending is made in the outside second core curved side component 14a. The second core 3 is provided with a cleat fastening hole 26 at a position corresponding to the cleat attachment holes 7. As shown in Figure 6, insertion holes 27 that are used to insert and fix spikes are made in the forward extension component 24.

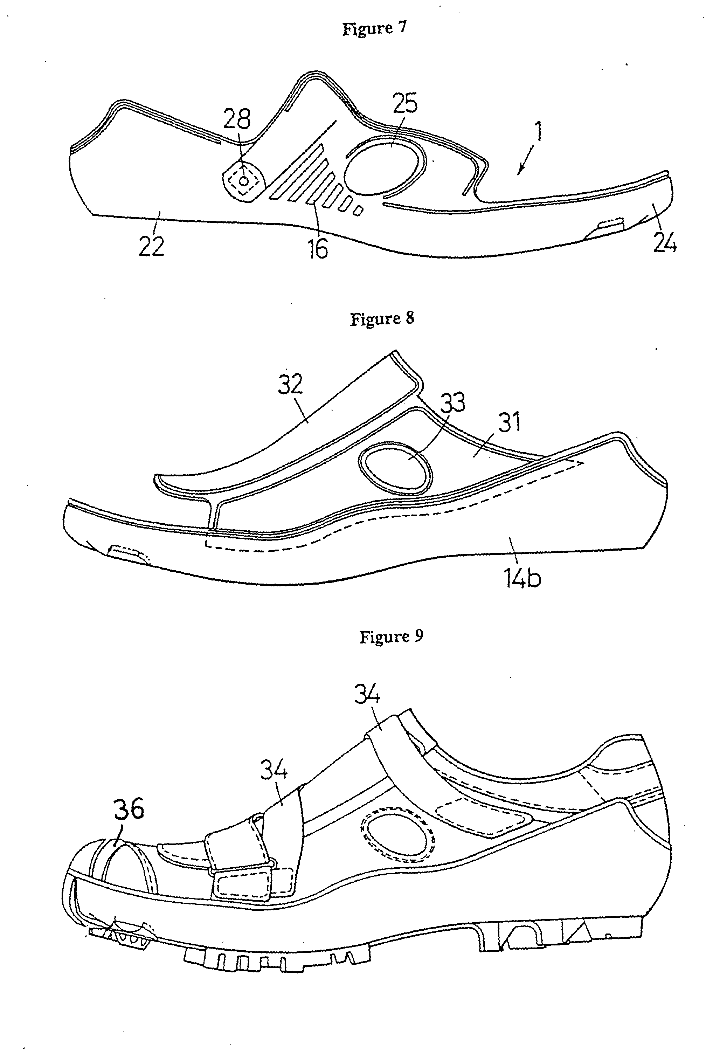

Figure 7 is an elevation of Figure 6, which is a bottom view. A strap fastening hole 28 that is used to fastening the end of the strap to the rearward extension component 22 is made to the rear of the reinforcing protrusion structure 16. As shown in Figure 6, a reinforcing molded band component 29 is provided in order to integrally connect the second core side components 12 on both sides of the second core 3 and structurally reinforce the second core side components 12.

Figure 8 shows the state when the upper member has been stitched to the sole core 1 shown in Figures 5 through 7. A first upper member 31 is fastened by stitching to the upper edge of the inside second core curved side component 14b, and a second upper member 32 is fastened by stitching to the upper edge of the first upper member 31. A hole 33 that provides ease of bending is made in the first upper member 31.

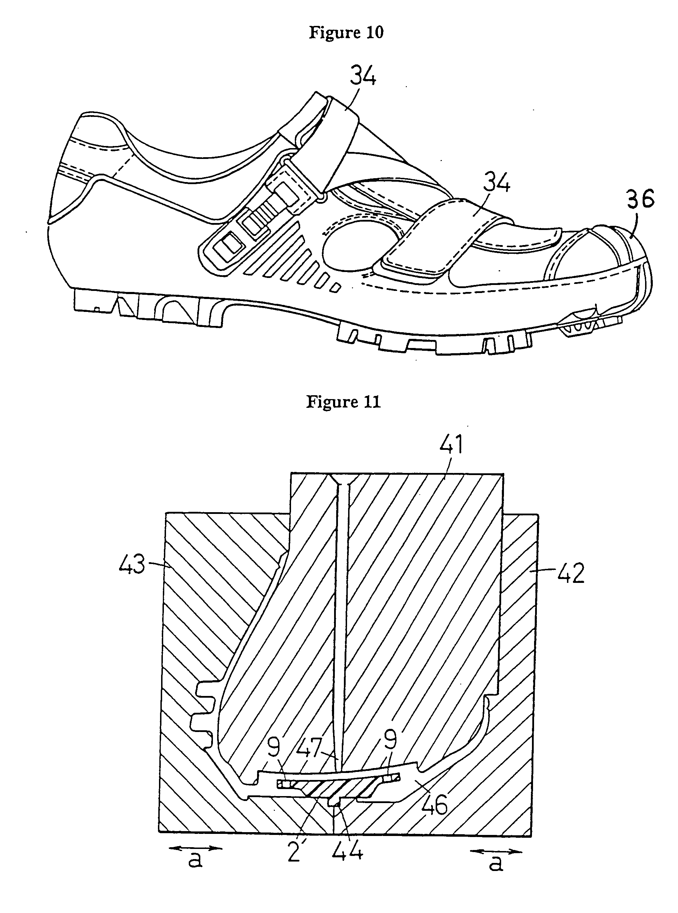

Figures 9 and 10 show the completed state of the cycling shoe in which the sole core 1 is used. The first upper member 31 and the second upper member 32 overlap from above the outside second core curved side component 14a. The outside second core curved side component 14a is tightened and held down by a plurality of partially overlapping straps 34 below the first upper member 31 and the second upper member 32. A surface-attaching fastener is attached at the portions where the straps overlap above and below. In addition, decorative members, a toe reinforcement member 36, and the like are fastened on by an adhesive or stitching. The bendability of the relatively flexible outside second core curved side component 14a is enhanced by the decorative hole 25. The bendability of the first upper member 31 is enhanced by the hole 33.

The rigidity of the sole core 1 is primarily provided by the first core 2. This rigidity elastically permits relative inclination motion between the foot and the pedal. The second core covering component 11 is between the bottom of the foot and the first core 2, where it softens and attenuates impacts. The second core lower covering component 13 and the lower protrusion component 15 soften impacts during walking. The portion of the second core 3 that goes through the bonding strength reinforcing holes 9 strengthens the bond between the first core 2 and the second core 3. The outside second core curved side component 14a and the inside second core curved side component 14b are joined to the second core 3 and preserve rigidity, while they also are deformable and conform adsorptively to the foot. The concave components 17 enhance this deformability.

Figure 11 illustrates a molding method and apparatus for molding the cycling shoe sole core pertaining to the present invention. Specifically, Figure 11 illustrates a molding method and a mold apparatus thereof for the cycling shoe sole core 1 that is composed of a first core 2 equipped with a fixing component for fixing a cleat, and a second core 3 that is integrally joined to the left and right sides of the first core 2 and has second core curved side components that curve upward, and in which the material of the first core 2 is harder than that of the second core 3. The mold apparatus consists of a fixed side mold element 41 and two movable side mold elements 42 and 43. The movable side mold elements 42 and 43 move back and forth in the direction indicated by the arrow a.

A plurality of protrusions 44 used for positioning are formed on the first core 2' produced in a previous step. The first core 2' has already been inserted into an injection molding mold apparatus. These protrusions 44 are removed upon completion of the step discussed below. The positioning holes into which the protrusions 44 are inserted are molded into the side mold elements 42 and 43. A cavity 46 is formed by the fixed side mold element 41, the movable side mold elements 42 and 43, and the first core 2'.

The movable side mold element 42 and/or the movable side mold element 43 form the lower surface of the second core 3, and the movable side mold elements 42 and 43 form the outside curve surface of the left and right curved side components of the second core. The first core 2' forms a joining surface with the second core 3. The other joining surfaces shown in Figure 1 are formed by the first core 2'.

A gate 47 is formed in the fixed side mold element 41. The molten resin material that is used to mold the second core 3 is injected from the gate 47 of the closed mold apparatus. The injected molten resin material exerts pressure on all surfaces except the lower surface of the first core 2', and infiltrates under pressure the bonding strength reinforcing holes 9 made in the first core 2'. After cooling, the movable side mold elements 42 and 43 are separated in the direction of the arrow a. This separation is possible because of the flexibility of the second core 3. The sole core 1 is pulled or pushed out of the fixed side mold element 41, and the protrusions 44 are removed. The pushing rod is not shown. The first core 2 and the second core 3 are securely joined together by means of the melting heat. This joining is further strengthened by the presence of the bonding strength reinforcing holes 9. The mold apparatus can also comprise four or more parts rather than three.

While the above is a description of various embodiments of the present invention, further modifications may be employed without departing from the scope of the present invention. Thus, the scope of the invention should not be limited by the specific structures disclosed. Instead, the true scope of the invention should be determined by the following claims. Of course, although labeling symbols are used in the claims in order to facilitate reference to the figures, the present invention is not intended to be limited to the constructions in the appended figures by such labeling.

## Claims

1. A cycling shoe core comprising:
a first core (2) having a curved longitudinal shape and a cleat attachment hole (7);
a second core (3) affixed to the first core (2) on a left side component (8b) and a right side component (8b) of the first core (2) and having at least one upwardly extending side component (14);
wherein the first core (2) is stiffer than the second core (3), and the second core (3) includes a second core upper covering component which covers an upper surface of the first core (2); and
the left side component (8b) and the right side component (8b) of the first core (2) are formed thinner than a centre component (8a) of the first core (2).

2. The cycling shoe core according to Claim 1 wherein the second core (3) is formed by injection molding the second core (3) around the first core (2).

3. The cycling shoe core according to either preceding claim wherein the second core (3) includes:
a left side component (14a) extending upwardly from the left side component (8b) of the first core (2); and
a right side component (14b) extending upwardly from the right side component (8b) of the first core (2).

4. The cycling shoe core according to Claim 3 wherein the left side component (14a) extends upwardly more than the right side component (14b).

5. The cycling shoe core according to any preceding claim wherein the second core (2) includes a second core lower covering component (13) disposed beneath a lower surface of the first core (2).

6. The cycling shoe core according to any preceding claim wherein the first core (2) includes a plurality of bonding strength reinforcing holes (9), and wherein portions of the second core (3) extend into the plurality of bonding strength reinforcing holes (9).

7. The cycling shoe core according to Claim 6 wherein the plurality of bonding strength reinforcing holes (9) are disposed in the left side component (8b) and in the right side component (8b) and wherein portions of the second core (3) extend through the plurality of bonding strength reinforcing holes (9) in both the left side component (8b) and the right side component (8b).

8. The cycling shoe core according to any preceding claim wherein the first core (2) is formed from plastic and the second core (3) is formed from a resin elastomer.

9. The cycling shoe core according to Claim 8 wherein the first core (2) is formed from a nylon material containing fibres, and wherein the second core (3) is formed from one of a nylon elastomer or polyurethane.

10. A method of molding a cycling shoe core comprising the steps of:
inserting a first core (2) having a cleat fixing component into an injection molding mold (41, 42, 43);
forming a cavity (46) between the first core (2) and the mold (41, 42, 43) wherein the cavity (46) extends along a left side component (8b) and a right side component (8b) of the first core (2) and wherein the cavity extends upwardly from the left side component (8b) and the right side component (8b) of the first core (2);
injecting second core material that is less stiff than material forming the first core (2) into the cavity (46) for forming a second core (3) joined to the first core (2), wherein a second core upper covering component of the second core covers an upper surface of the first core (2), and the left side component (8b) and the right side component (8b) of the first core (2) are formed thinner than a centre component (8a) of the first core (2).

11. The method according to Claim 10 wherein the injecting step comprises the step of injecting the second core material into bonding strength reinforcing holes (9) formed in the first core (2).

12. The method according to Claim 11 wherein the injecting step comprises the step of injecting the second core material through bonding strength reinforcing holes (9) formed in the left side component (8b) of the first core (2) and through bonding strength reinforcing holes (9) formed in the right side component (8b) of the first core (2).

13. A molding apparatus for molding a cycling shoe core (2, 3) of the type having a first core (2) equipped with a fixing component for fixing a cleat and a second core (3) that is integrally joined to left and right sides (8b) of the first core (2), wherein the second core (3) has side components (14a, 14b) that extend upwardly from the left and right sides (8b) of the first core (2) and the second core (3) has a second core upper covering component (11) which covers an upper surface of the first core (2), the apparatus comprising:
a first mold element (42, 43) that forms a lower surface of the second core (3);
a second mold element (41) that forms inside surfaces of the side components (14a, 14b) of the second core (3); and
a third mold element (42, 43) that forms an outside surface of at least one of the side components (14a, 14b) of the second core (3).

## Patentansprüche

1. Kern von einem Fahrradschuh umfassend:
einen ersten Kern (2), der eine gekrümmte längliche Form aufweist und eine Laschenbefestigungsöffnung (7) besitzt;
einen zweiten Kern (3), der mit dem ersten Kern (2) an einem linken Seitenelement (8b) und einem rechten Seitenelement (8b) des ersten Kernes (2) verbunden ist und mindestens einen sich nach oben erstreckendes Seitenteil (14) aufweist;
wobei der erste Kern (2) steifer ist als der zweite Kern (3), und der zweite Kern (3) ein die Unterseite des zweiten Kernes abdeckendes Teil umfasst, welches eine obere Fläche des ersten Kernes (2) abdeckt; und
das linke Seitenelement (8b) und das rechte Seitenelement (8b) des ersten Kernes (2) dünner ausgebildet sind als ein mittleres Element (8a) des ersten Kernes (2).

2. Kern von einem Fahrradschuh nach Anspruch 1, bei welchem der zweite Kern (3) durch Spritzgießen des zweiten Kernes (3) um den ersten Kern (2) gebildet wird.

3. Kern von einem Fahrradschuh nach einem jeden der vorhergehenden Ansprüche, bei welchem der zweite Kern (3) umfasst:
ein linkes Seitenelement (14a), welches sich vom linken Seitenelement (8b) des ersten Kernes (2) nach oben erstreckt; und
ein rechtes Seitenelement (14b), welches sich vom rechten Seitenelement (8b) des ersten Kernes (2) nach oben erstreckt.

4. Kern von einem Fahrradschuh nach Anspruch 3, bei welchem das linke Seitenelement (14a) sich mehr als das rechte Seitenelement (14b) nach oben erstreckt.

5. Kern von einem Fahrradschuh nach einem jeden der vorhergehenden Ansprüche, bei welchem der zweite Kern (2) ein die Unterseite des zweiten Kernes abdeckendes Element (13) aufweist, welches unterhalb der unteren Fläche des ersten Kernes (2) angeordnet ist.

6. Kern von einem Fahrradschuh nach einem jeden der vorhergehenden Ansprüche, bei welchem der erste Kern (2) eine Mehrzahl von die Verbindungskraft verstärkenden Öffnungen (9) besitzt und bei welchem Bereiche des zweiten Kernes (3) sich in die Mehrzahl von den die Verbindungskraft verstärkenden Öffnungen (9) erstrecken.

7. Kern von einem Fahrradschuh nach Anspruch 6, bei welchem die Mehrzahl der die Verbindungskraft verstärkenden Öffnungen (9) in dem linken Seitenelement (8b) und in dem rechten Seitenelement (8b) angeordnet sind und bei welchem die Bereiche des zweiten Kernes (3) sich durch die Mehrzahl der die Bindungskraft verstärkenden Öffnungen (9) sowohl des linken Seitenelementes (8b) als auch des rechten Seitenelementes (8b) erstrecken.

8. Kern von einem Fahrradschuh nach einem jeden der vorhergehenden Ansprüche, bei welchem der erste Kern (2) aus einem plastischen Kunststoff und der zweite Kern (3) aus einem elastomeren Kunststoff gebildet ist.

9. Kern von einem Fahrradschuh nach Anspruch 8, bei welchem der erste Kern (2) aus einem Fasern enthaltenden Nylonmaterial und der zweite Kern (3) entweder aus elastomerem Nylonmaterial oder aus Polyurethan gebildet ist.

10. Formgebungsverfahren für einen Kern von einem Fahrradschuh, umfassend folgende Schritte:
Einsetzen eines ersten Kernes (2), der ein Laschenbefestigungselement aufweist, in eine Spritzgießform (41, 42, 43);
Bildung eines Hohlraumes (46) zwischen dem ersten Kern (2) und der Form (41, 42, 43), wobei der Hohlraum (46) sich entlang eines linken Seitenelementes (8b) und eines rechten Seitenelementes (8b) des ersten Kernes (2) erstreckt, und der Hohlraum sich von dem linken Seitenelement (8b) und dem rechten Seitenelement (8b) des ersten Kernes (2) nach oben erstreckt;
Spritzgießen eines zweiten Kernmaterials, welches weniger steif als das Material ist, welches den ersten Kern (2) bildet, in den Hohlraum (46) zum Bilden eines zweiten Kerns (3), der mit dem ersten Kern (2) verbunden wird, wobei ein die Oberseite des zweiten Kernes abdeckendes Element des zweiten Kernes eine obere Fläche des ersten Kernes (2) abdeckt, und das linke Seitenelement (8b) und das rechte Seitenelement (8b) des ersten Kernes (2) dünner ausgebildet sind als ein mittleres Element (8a) des ersten Kernes (2).

11. Verfahren nach Anspruch 10, bei welchem der Spritzgießschritt den Schritt des Spritzens des zweiten Kernmaterials in die die Verbindungskraft verstärkenden Öffnungen (9) umfasst, welche in den ersten Kern (2) eingeformt sind.

12. Verfahren nach Anspruch 11, bei welchem der Spritzgießschritt einen Schritt des Spritzens des zweiten Kernmaterials durch die die Verbindungskraft verstärkenden Öffnungen (9) umfasst, die in das linke Seitenelement (8b) des ersten Kernes (2) eingeformt sind, und durch die die Verbindungskraft verstärkenden Öffnungen (9), die in das rechte Seitenelement (8b) des ersten Kernes (2) eingeformt sind.

13. Formvorrichtung zum Gießen eines Kernes von einem Fahrradschuh (2, 3) des Typs, welcher einen ersten Kern (2) aufweist, der mit einem Befestigungselement zur Befestigung einer Lasche versehen ist, und einen zweiten Kern (3), welcher integral mit dem linken und rechten Seiten (8b) des ersten Kernes (2) verbunden ist, wobei der zweite Kern (3) Seitenelemente (14a, 14b) umfasst, die sich von der rechten und linken Seite (8b) des ersten Kernes (2) nach oben erstrecken, und der zweite Kern (3) ein die Oberseite des zweiten Kernes abdeckendes Element (11) besitzt, welches eine obere Fläche des ersten Kernes (2) abdeckt, und die Vorrichtung umfasst:
ein erstes Formelement (42, 43), welches eine untere Fläche des zweiten Kernes (3) bildet;
ein zweites Formelement (41), welches die inneren Flächen der Seitenelemente (14a, 14b) des zweiten Kernes (3) bildet; und
ein drittes Formelement (42, 43), welches eine Außenfläche mindestens eines der Seitenelemente (14a, 14b) des zweiten Kernes (3) bildet.

## Revendications

1. Noyau de chaussure de cyclisme comprenant :
un premier noyau (2) ayant une forme longitudinale courbe et un trou de fixation d'armature (7) ;
un second noyau (3) fixé au premier noyau (2) sur un composant gauche (8b) et un composant droit (8b) du premier noyau (2) et ayant au moins un composant latéral s'étendant vers le haut (14) ;
dans lequel le premier noyau (2) est plus rigide que le second noyau (3), et le second noyau (3) comprend un composant de couverture supérieure de second noyau qui couvre une surface supérieure du premier noyau (2) ; et
le composant gauche (8b) et le composant droit (8b) du premier noyau (2) sont plus fins que le composant central (8a) du premier noyau (2).

2. Noyau de chaussure de cyclisme selon la revendication 1 dans lequel le second noyau (3) est fabriqué en moulant par injection le second noyau (3) autour du premier noyau (2).

3. Noyau de chaussure de cyclisme selon l'une quelconque des revendications précédentes dans lequel le second noyau (3) comprend :
un composant gauche (14a) s'étendant vers le haut depuis le composant gauche (8b) du premier noyau (2) ; et
un composant droit (14b) s'étendant vers le haut depuis le composant droit (8b) du premier noyau (2).

4. Noyau de chaussure de cyclisme selon la revendication 3 dans lequel le composant gauche (14a) s'étend vers le haut plus que le composant droit (14b).

5. Noyau de chaussure de cyclisme selon l'une quelconque des revendications précédentes dans lequel le second noyau (2) comprend un composant de couverture inférieure de second noyau (13) disposé sous une surface inférieure du premier noyau (2).

6. Noyau de chaussure de cyclisme selon l'une quelconque des revendications précédentes dans lequel le premier noyau (2) comprend une pluralité de trous de renforcement par collage (9), et dans lequel des parties du second noyau (3) s'étendent dans la pluralité de trous de renforcement par collage (9).

7. Noyau de chaussure de cyclisme selon la revendication 6 dans lequel la pluralité de trous de renforcement par collage (9) sont disposés dans le composant gauche (8b) et dans le composant droit (8b) et dans lequel des parties du second noyau (3) s'étendent à travers la pluralité de trous de renforcement par collage (9) dans à la fois le composant gauche (8b) et le composant droit (8b).

8. Noyau de chaussure de cyclisme selon l'une quelconque des revendications précédentes dans lequel le premier noyau (2) est fait en plastique et le second noyau (3) est fait en une résine élastomère.

9. Noyau de chaussure de cyclisme selon la revendication 8 dans lequel le premier noyau (2) est fait de nylon contenant des fibres, et dans lequel le second noyau (3) est fait d'un élastomère nylon ou de polyuréthane.

10. Procédé de moulage d'un noyau de chaussure de cyclisme comprenant les étapes consistant à :
insérer un premier noyau (2) ayant un composant de fixation d'armature dans un moule (41, 42, 43) de moulage par injection ;
former une cavité (46) entre le premier noyau (2) et le moule (41, 42, 43) où la cavité (46) s'étend le long d'un composant gauche (8b) et d'un composant droit (8b) du premier noyau (2) et où la cavité s'étend vers le haut depuis le composant gauche (8b) et le composant droit (8b) du premier noyau (2) ;
injecter un matériau de second noyau qui est moins rigide que le matériau formant le premier noyau (2) dans la cavité (46) pour former un second noyau (3) joint au premier noyau (2), où un composant de couverture inférieure de second noyau du second noyau recouvre une surface supérieure du premier noyau (2), et le composant gauche (8b) et le composant droit (8b) du premier noyau (2) sont plus fins qu'un composant central (8a) du premier noyau (2).

11. Procédé selon la revendication 10 dans lequel l'étape d'injection comprend l'étape consistant à injecter le matériau du second noyau dans les trous de renforcement par collage (9) formés dans le premier noyau (2).

12. Procédé selon la revendication 11 dans lequel l'étape d'injection comprend l'étape consistant à injecter le matériau du second noyau par les trous de renforcement par collage (9) formés dans le composant gauche (8b) du premier noyau (2) et par les trous de renforcement par collage (9) formés dans le composant droit (8b) du premier noyau (2).

13. Dispositif de moulage pour mouler un noyau de chaussure de cycliste (2, 3) du type ayant un premier noyau (2) équipé d'un composant de fixation pour fixer une armature et un second noyau (3) qui est intégralement joint aux côtés gauche et droit (8b) du premier noyau (2), où le second noyau (3) a des composants latéraux (14a, 14b) qui s'étendent vers le haut depuis les côtés gauche et droit (8b) du premier noyau (2) et le second noyau (3) a un second composant de couverture supérieure de noyau (11) qui couvre une surface supérieure du premier noyau (2), le dispositif comprenant :
un premier élément de moule (42, 43) qui forme une surface inférieure du second noyau (3) ;
un second élément de moule (41) qui forme des surfaces intérieures des composants latéraux (14a, 14b) du second noyau (3) ; et
un troisième élément de moule (42, 43) qui forme une surface extérieure d'au moins un des composants latéraux (14a, 14b) du second noyau (3).
